(19) Europäisches Patentamt
European Patent Office
Office européen des brevets

(11) EP 1 437 394 A1

(12) EUROPEAN PATENT APPLICATION

(43) Date of publication:
**14.07.2004 Bulletin 2004/29**

(51) Int Cl.[7]: **C09J 163/00**, C08G 59/18

(21) Application number: **03027468.2**

(22) Date of filing: **01.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **02.12.2002 JP 2002350144**
**29.05.2003 JP 2003152683**

(71) Applicant: **NITTO DENKO CORPORATION**
**Ibaraki-shi, Osaka 567-8680 (JP)**

(72) Inventors:
- **Misumi, Sadahito**
**Ibaraki-shi Osaka, 567-8680 (JP)**
- **Matsumura, Takeshi**
**Ibaraki-shi Osaka, 567-8680 (JP)**
- **Mizutani, Masaki**
**Ibaraki-shi Osaka, 567-8680 (JP)**

(74) Representative: **VOSSIUS & PARTNER**
**Siebertstrasse 4**
**81675 München (DE)**

# (54) Adhesives composition, adhesive film, and semiconductor apparatus using the same

(57) An adhesive composition is provided that may give stable fixing strength without variation in a coated amount, and may form an adhesive film having excellent storage stability in fixing of semiconductor chips with electrode members. Moreover, an adhesive film (adhesive film for die bonding) obtained from the composition concerned is provided. An adhesive composition is used that is characterized by including epoxy resins (A), phenol resins (B), synthetic rubbers (C), and microcapsules (D) including hardening accelerator that has a core/shell structure in which a core part including hardening accelerator is covered by a shell part formed with thermoplastic resins.

EP 1 437 394 A1

## Description

The present invention relates to an adhesive composition, and to an adhesive film obtained from the composition concerned. An adhesive film by the present invention is useful as an adhesive film for die bonding used as a fixing material between semiconductor chips and electrode members.
The present invention also relates to a semiconductor device using the adhesive film for die bonding concerned. An adhesive composition of the present invention is used as an optimal adhesive film for die bonding for semiconductor devices, and also it is useful in adhesives, paint application, etc. in fields other than semiconductor application.
Conventionally, a silver paste has been used for fixing of semiconductor chips to lead frames or electrode members in manufacturing process of semiconductor devices. In fixing processes, paste-shaped adhesives are coated on a die pad of the lead frame etc., a semiconductor chip is mounted thereon to harden the paste-shaped adhesives layer.
However, viscosity behavior, degradation, etc. of the paste-shaped adhesives cause a large variation in coated amount, and coating shape, etc., which gives un-uniformity to a thickness of the paste-shaped adhesives formed, and deteriorates reliability of fixing strength of semiconductor chips. That is, shortage of the coated amount of the paste-shaped adhesives deteriorates a fixing strength between a semiconductor chip and electrode members, leading to peel of the semiconductor chip in a following wire bonding process. On the other hand, excessive amount of the paste-shaped adhesives has the paste-shaped adhesives flown out on the semiconductor chip, causing characteristic defect, and degradation of yield or reliability. Problems in such a fixing process is remarkable in particular with upsizing of semiconductor chips, which requires frequent control of the coated amount of the paste-shaped adhesives, and causes some trouble in workability and productivity.
In this coating process of the paste-shaped adhesives, a method for separately coating the paste-shaped adhesives to a lead frame or a formed chip is proposed. However, in this method, a uniform paste-shaped adhesives layer is difficult to be obtained, and special equipment and long period of time are required for application of the paste-shaped adhesives. Therefore, a die bond film is proposed that gives also an adhesives layer required for a mounting process for chip fixing while securing adhesion and retention of a semiconductor wafer in a dicing process (refer to, for example, Referential Patent 1).
In this die bond film, an adhesives layer is provided in a separable state on a support base material. After dicing of the semiconductor wafer in a state supported by the adhesives layer, the support base material is stretched to separate formed chips together with the adhesives layer. These are separately collected and fixed, via the adhesives layer, to adherends such as a lead frame.
Die bond films including epoxy resins and epoxy resin curing agents are proposed (refer to, for example, Referential Patent 2). The hardening accelerators for curing needs to be blended beforehand in the die bond films including epoxy resins and epoxy resin curing agents. However, the die bond films including the hardening accelerators have unsatisfactory storage stability. Accordingly, it has a very short working life after blended, causing a problem of degradation of working efficiency.

[Referential Patent 1]

Japanese Patent Laid-Open No. 60-57342 official gazette

[Referential Patent 2]

Japanese Patent Laid-Open No. 2002-212522 official gazette

The present invention is made in view of the above-mentioned situation, and aims at providing an adhesive composition that may form an adhesive film giving no variation in coated amount and stable fixing strength, and having excellent storage stability, and an adhesive film obtained from the composition concerned in fixing of semiconductor chips with electrode members. The present invention also aims at providing a semiconductor device using the above-mentioned adhesive film as an adhesive film for die bonding.
As a result of repeated examination wholeheartedly performed by the present inventors in order to solve the above-mentioned subjects, there was found out that following adhesive composition and adhesive film might attain the above-mentioned object, leading to completion of the present invention. The present invention will, hereinafter, be described.

1. An adhesive composition comprising epoxy resins (A), phenol resins (B), synthetic rubber (C), and microcapsules (D) including the hardening accelerator that has a core/shell structure in which a core part including the hardening accelerator is covered by a shell part formed with thermoplastic resins.

2. The adhesive composition according to above-mentioned 1, wherein a shell part of the microcapsule (D) including the hardening accelerator is formed with a polyurea having an isocyanate compound using a triisocyanate compound (1) represented with following chemical formula (1), and a triisocyanate compound (2) represented with following chemical formula (2) at a percentage of a mixed molar ratio of (compound (1)) / (compound (2)) = 100 / 0 - 30 / 70 as a constituent element.

**Chemical formula -- (1)**

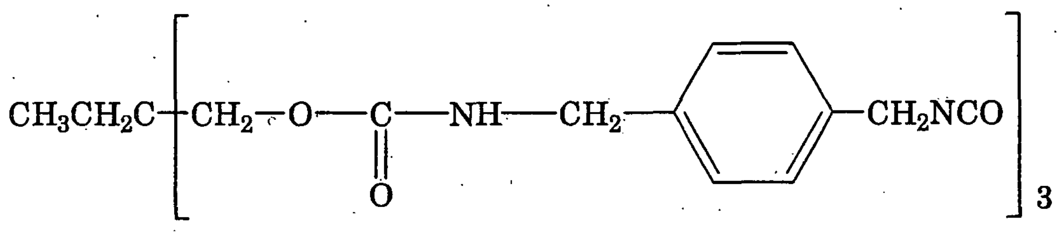

**Chemical formula -- (2)**

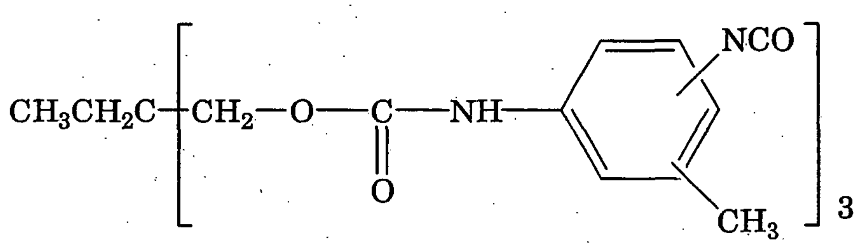

3. The adhesive composition according to above-mentioned 1, wherein a shell part of the microcapsule (D) including the hardening accelerator is formed with a polyurea having a triisocyanate compound (3) represented with following general formula (3) (where, R represents a bivalent organic group in the general formula (3)) as a constituent element.

**Chemical formula -- (3)**

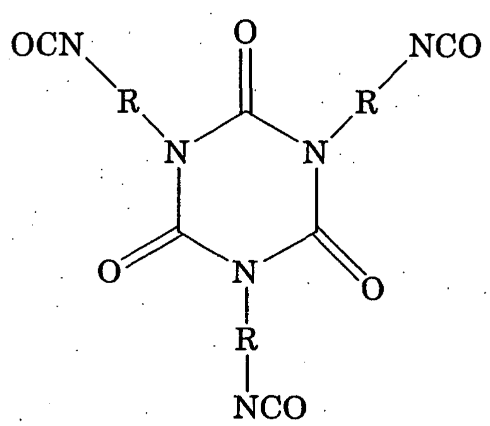

4. The adhesive composition according to above-mentioned 1, wherein the epoxy resin (A) has a novolak type epoxy resin represented with a following general formula (4) (where, G represents a glycidyl group, R represents -H or -$CH_3$, and n represents an integer of 1 or more in the general formula (4)) as a principal component.

**Chemical formula -- (4)**

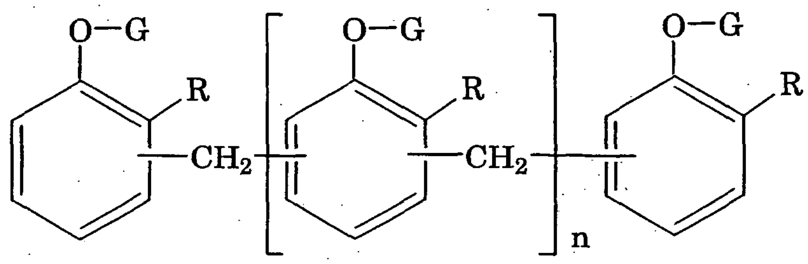

5. The adhesive composition according to above-mentioned 1, wherein the epoxy resin (A) has a biphenyl type epoxy resin represented with a following general formula (5) (where, R represents -H or -$CH_3$ in the general formula (5)) as a principal component.

**Chemical formula -- (5)**

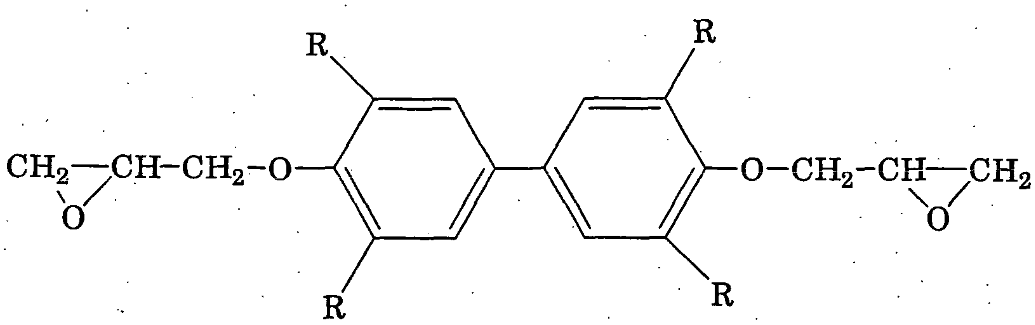

6. The adhesive composition according to above-mentioned 1, wherein the epoxy resin (A) has a trishydroxyphenylmethane type epoxy resin represented with a following general formula (6) (where, G represents a glycidyl group, R represents -H or -$CH_3$, and n represents an integer of 0 or 1 or more in the general formula (6)) as a principal component.

**Chemical formula -- (6)**

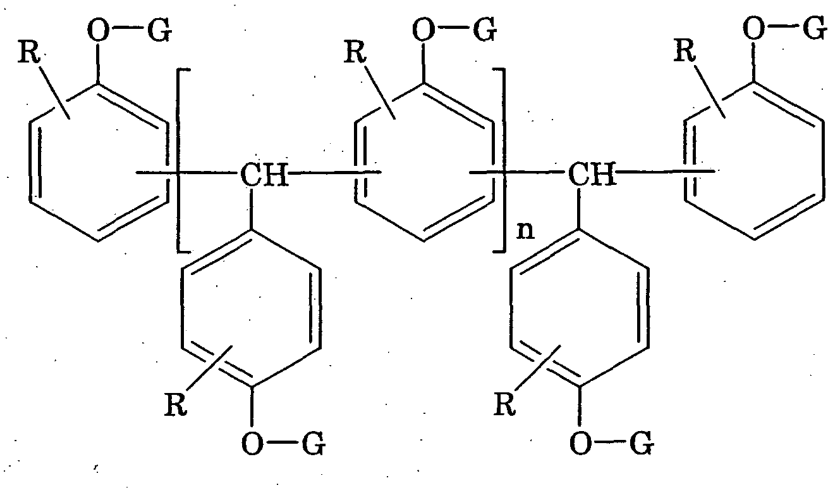

7. The adhesive composition according to above-mentioned 1, wherein the epoxy resin (A) has a tetraphenylol ethane type epoxy resin represented with a following general formula (7) (where, G represents a glycidyl group, and $R_1$ and $R_2$ independently represent -H or $-CH_3$, respectively, in the general formula (7)) as a principal component.

**Chemical formula -- (7)**

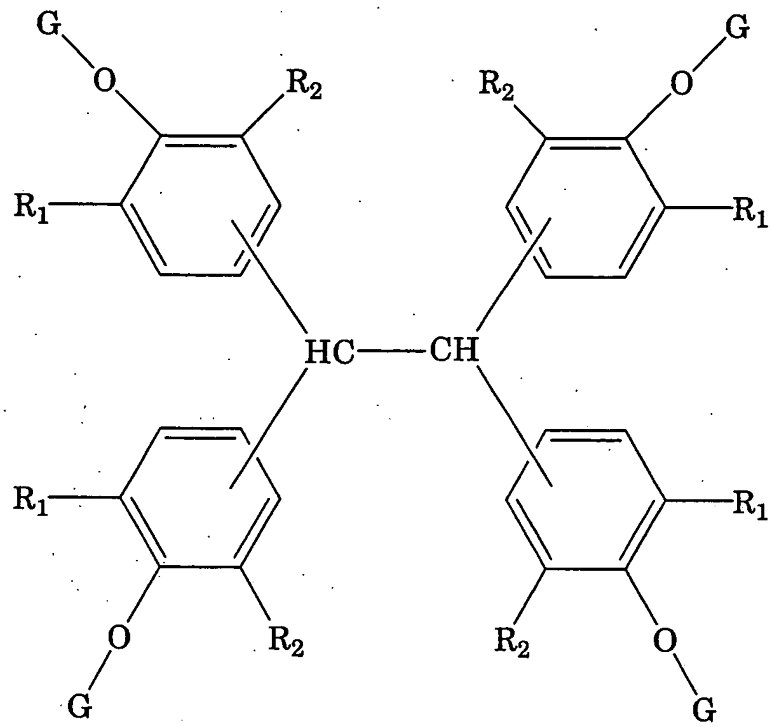

8. The adhesive composition according to above-mentioned 1, wherein the phenol resin (B) is a phenol novolak resin represented with a following general formula (8) (where, n represents an integer of 0 or 1 or more in the general formula (8)).

**Chemical formula -- (8)**

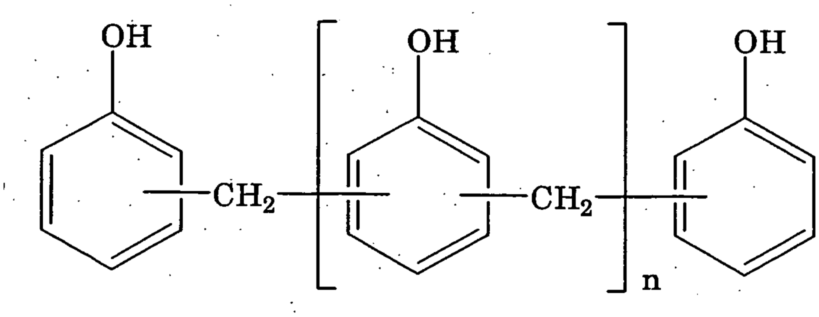

9. The adhesive composition according to above-mentioned 1, wherein the phenol resin (B) is a phenol aralkyl resin represented with a following general formula (9) (where, n represents an integer of 0 or 1 or more in the general formula (9)).

**Chemical formula -- (9)**

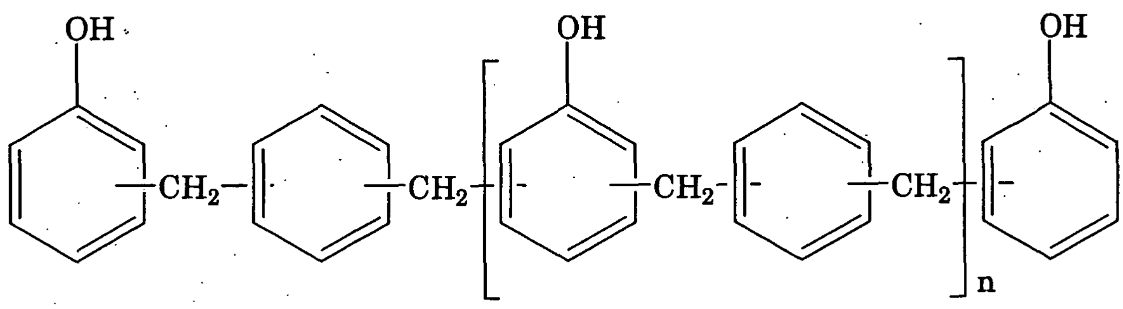

10. The adhesive composition according to above-mentioned 1, wherein the synthetic rubber (C) is an acrylonitrile-butadiene rubber having a repeating unit represented with a following general formula (10) (where, x : y = 1 - 99 : 1 - 99 in the general formula (10)) as a principal constituent element.

**Chemical formula -- (10)**

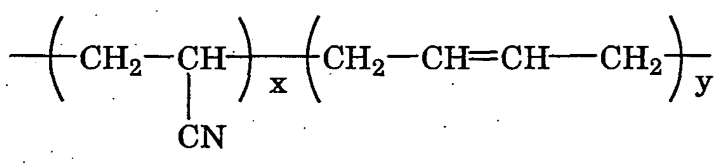

11. The adhesive composition according to above-mentioned 1, wherein the synthetic rubber (C) is a carboxylated acrylonitrile-butadiene rubber having a repeating, unit represented with a following general formula (11) (where, R represents -H or $-CH_3$, and x : y : z = 1 - 98 : 1 - 98 : 1 - 98 in the general formula (11)) as a principal constituent element.

**Chemical formula -- (11)**

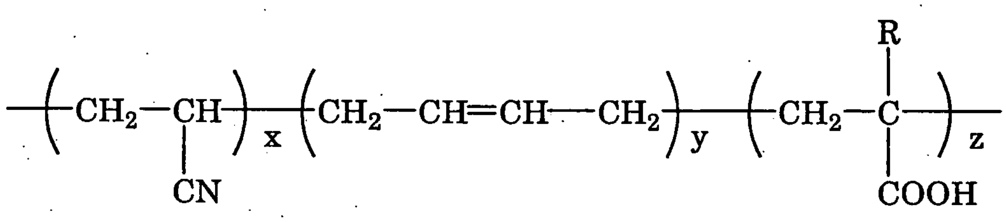

12. The adhesive composition according to above-mentioned 1, wherein the synthetic rubber (C) is a carboxylated acrylic rubber having a repeating unit represented with a following general formula (12) (where, R represents a monovalent organic group, and x represents an integer of 1 or more in the general formula (12)) as a principal constituent element.

**Chemical formula -- (12)**

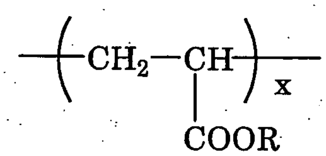

13. The adhesive composition according to above-mentioned. 1, wherein inorganic fillers are further included.
14. An adhesive film being formed of the adhesive composition according to above-mentioned 1.
15. A laminated adhesive film comprising the adhesive film according to above-mentioned 14 and a pressure sensitive adhesive film.
16. An adhesive film for die bonding using the adhesive film according to above-mentioned 14 or 15.
17. A semiconductor apparatus wherein a semiconductor device is die-bonded using the adhesive film for die bonding according to above-mentioned 16.

The above-mentioned adhesive composition of the present invention uses a microcapsule (D) including the hardening accelerator as the hardening accelerator. An adhesive film formed of this adhesive composition may control a curing reaction by existence of component (D). For example, use of the adhesive film concerned as an adhesive film for die bonding may form excellent adhesive layer with a uniform thickness etc. on electrode members. That is, an adhesive layer without variation in coated amount and with a stable fixing strength may be formed. Moreover, since the above-mentioned adhesive composition and a pressure sensitive adhesive sheet have excellent storage stability, they improve workability in coating, and productivity. Furthermore, the excellent storage stability mentioned above enables fixing process of semiconductor chips at low temperatures, and may demonstrate durability in following processes of wire-bonding connection, resin mold sealing, etc. in manufacture of semiconductor devices.

As epoxy resins (A), resins used in general as adhesive compositions may be used without any limitation. There may be used bifunctional epoxy resins and multi-functional epoxy resins, for example, bisphenol A type, bisphenol F type, bisphenol S type, brominated bisphenol A type, hydrogenerated bisphenol A type, bisphenol AF type, biphenyl type, naphthalene type, fluorene type, phenol novolak type, orthocresol novolak type, trishydroxy phenyl methane type, a tetra phenylol ethane type; and epoxy resins such as hydantoin type, glycidyl amine type such as trisglycidyl isocyanurate type. These epoxy resins may be independently used, or two or more kinds may be used in combination.

Among these epoxy resins, novolak type epoxy resins, biphenyl type epoxy resins, trishydroxy phenyl methane type epoxy resins, tetraphenylol ethane type epoxy resins, etc. are preferable in respect of having excellent reactivity with the phenol resins (B), which is a curing agent, and of having excellent heat resistance etc.

Particularly, an epoxy resin including at least one kind selected from a group consisting of novolak type epoxy

resins represented with the above-mentioned general formula (4); biphenyl type epoxy resins represented with the above-mentioned general formula (5); trishydroxy phenyl methane type epoxy resins represented with the above-mentioned general formula (6); and tetraphenylol ethane type epoxy resins represented with the above-mentioned general formula (7), as a principal component is preferable. In addition, in novolak type epoxy resins represented with general formula (4), and trishydroxy phenyl methane type epoxy resins represented with general formula (6), n is preferably 0 - 1000, and more preferably 0 - 500 from a viewpoint of guarantee of fluidity of the adhesive film.

The above-mentioned phenol resins (B) act as a curing agent of the above-mentioned epoxy resins (A). For example, as these resins, novolak type phenol resins such as phenol novolak resins, phenol aralkyl resins, cresol novolak resins, tert-butyl phenol novolak resins, and nonyl phenol novolak resins; resol type phenol resins; polyoxystyrenes such as polyparaoxystyrenes, etc. may be mentioned. One of these phenol resins may independently be used, or two or more kinds may be used in combination.

Among them, from a viewpoint of improving connection reliability of semiconductor devices, resins having phenol novolak resins represented with the above-mentioned general formula (8) and/or phenol aralkyl resins represented with the above-mentioned general formula (9) as principal components are especially preferable. Moreover, in phenol novolak resins represented with general formula (8) and phenol aralkyl resins represented by general formula (9), n is preferably 0 - 1000, and more preferably 0 - 500 from a viewpoint of guarantee of fluidity of the adhesive film.

A blending ratio of the above-mentioned epoxy resin (A) and phenol resin (B) is not especially limited, and, for example, about 0.5 - 2 equivalents of hydroxyl groups in the phenol resin (B) is preferably blended per 1 equivalent of epoxy groups in the above-mentioned epoxy resin (A), and more preferably 0.8 - 1.2 equivalents. In the case where a blending ratio of both of them is within the above-mentioned range, a curing reaction fully advances and an epoxy resin cured compound with excellent characteristic may be obtained.

As the above-mentioned synthetic rubbers (C), synthetic rubbers that are used in general as adhesive compositions may be used without particular limitation. Especially, in the light of being excellent in compatibility with the above-mentioned epoxy resins (A) and phenol resins (B), there may especially preferably mentioned acrylonitrile-butadiene rubbers having a repeating unit represented with the above-mentioned general formula (10) as a principal constituent element; carboxylated acrylonitrile-butadiene rubbers having a repeating unit represented with the above-mentioned general formula (11) as a principal constituent element; and carboxylated acrylic rubbers having a repeating unit represented with the above-mentioned general formula (12) as a principal constituent element. One of these synthetic rubbers (C) may be used independently, or two or more kinds may be used in combination.

Moreover, in acrylonitrile-butadiene rubbers having a repeating unit represented with the general formula (10) as a principal constituent element, preferably a ratio of x : y = 10 - 90 : 10 - 90, more preferably x : y = 20 - 80 : 20- 80. In carboxylated acrylonitrile-butadiene rubbers having a repeating unit represented with the general formula (11) as a principal constituent element, preferably a ratio of x : y : z = 10 - 89 : 10 - 89 : 1 80, and more preferably x : y : z = 20 - 78 : 20 - 78 : 2 - 60. A repeating unit represented with the general formula (12) is no less than 20% by weight of the constituent element in the carboxylated acrylic rubbers concerned, and more preferably no less than 40% by weight. Moreover, as organic groups of R, alkyl groups such as methyl group, ethyl group, propyl group, and isopropyl group, etc. may be mentioned. Besides, in the general formula (10), the general formula (11), and the general formula (12), all of the constituent elements are represented by block unit for convenience, but these constitutional units may be any of random units or of block units.

A percentage to be used of the above-mentioned synthetic rubbers (C) is not especially limited, and, in usual, it is preferably approximately 5 - 95% by weight of whole of the adhesive composition (organic solid content except solvent), more preferably 10 - 90% by weight, and still more preferably 20 - 80% by weight. That is, when a percentage to be used of the synthetic rubber (C) is no less than 5% by weight, excellent film formation property may be obtained (independent film formation property). On the other hand, an excessive percentage to be used decreases a rate of epoxy resins (A), leading to a possibility of insufficient heat curing. Therefore, a percentage to be used is preferably adjusted to no more than 95% by weight.

Besides, as an adhesive composition of the present invention, other than the above-mentioned synthetic rubbers (C) illustrated, for example, natural rubbers, butyl rubbers, isoprene rubbers, chloroprene rubbers, ethylene-vinylacetate copolymers, ethylene-acrylic acid copolymers, ethylene-acrylic acid ester copolymers, etc. may be used in combination as rubber components. These rubber components may be used independently, or two or more kinds may be used in combination. These rubber components may be used within a range in which the component can be dissolved in organic solvents that are used in order to dissolve the adhesive composition.

An adhesive composition of the present invention uses a microcapsule (D) including a hardening accelerator having a core/shell structure covered with a shell part formed with thermoplastic resins, as a hardening accelerator.

The hardening accelerator included inside as the above-mentioned core part is not especially limited, but conventionally well-known hardening accelerators may be used. As hardening accelerators, in view of workability at the time of preparation of a microcapsule and of characteristics of the microcapsule obtained, hardening accelerators having a liquid phase at ordinary temperatures is preferable. Besides, an expression "a liquid phase at ordinary temperatures" includes a case where a hardening accelerator itself has a liquid phase at ordinary temperatures, and also a case where a solid hardening accelerator is dissolved or dispersed in arbitrary organic solvents etc. at ordinary temperatures to have a liquid phase.

As the above-mentioned hardening accelerators, hardening accelerators such as amine based, imidazole based, phosphorus based, boron based, and phosphorus-boron based, may be mentioned. Concretely, there may be mentioned: alkylated guanidines such as ethyl guanidine, trimethyl guanidine, phenyl guanidine, and diphenylguanidine; 3-substituted phenyl-1,1-dimethyl ureas such as 3-(3,4-dichloro phenyl)-1,1-dimethyl urea, 3-phenyl-1,1-dimethyl urea ,and 3-(4-chlorophenyl)-1,1-dimethyl urea; imidazolines such as 2-methyl imidazoline, 2-phenyl imidazoline, 2-undecyl imidazoline, and 2-heptadecyl imidazoline; mono amino pyridines such as 2-amino pyridine; amine imido based compounds such as N,N-dimethyl-N-(2-hydroxy-3-allyloxy propyl)amine-N-lactoimide; organic phosphorus based compounds such as ethyl phosphine, propyl phosphine, butyl phosphine, phenyl phosphine, trimethyl phosphine, triethyl phosphine, tributyl phosphine, trioctyl phosphine, triphenyl phosphine, tricyclohexyl phosphine, triphenyl phosphine/triphenyl boran complex, and tetra phenyl phosphonium tetraphenyl borate; and diazabicyclo alkene based compounds such as 1,8-diazabicyclo[5,4,0]undecene-7, and 1,5-diazabicyclo[4,3,0]nonene -5. These hardening accelerators may be used independently or two or more kinds may be used in combination. Among them, in view of preparation easiness of the microcapsule (D) including hardening accelerators and easy handling property, the above-mentioned organic phosphorus based compounds may suitably be used.

As organic solvents that may be included inside a shell part (wall membrane) of the above-mentioned microcapsule (D) including hardening accelerator, the organic solvent are not especially limited at least as long as it does not dissolve the shell part. In detail, oils such as phenyl xylyl ethane and dialkyl naphthalene, other than organic solvents such as ethyl acetate, methyl ethyl ketone, acetone, methylene chloride, xylene, toluene, and tetrahydrofuran, may be used.

Besides, thermoplastic resins for forming the above-mentioned shell part may not be especially limited, but various kinds of thermoplastic resins may be used. As thermoplastic resins, polyamides, polyimides, polyureas, etc. may be mentioned. Also among these thermoplastic resins, polyureas are preferable. Polyurea may be formed using isocyanate compounds.

As polyureas, polyureas having, as a constituent element, isocyanate compounds in which triisocyanate compounds (1) represented with the above-mentioned chemical formula (1) and triisocyanate compounds (2) represented with the above-mentioned chemical formula (2) are used at a mixed molar ratio of [compound (1) / compound (2) = 100 / 0 - 30 / 70 are excellent in storage stability, and preferably used.

The above-mentioned compounds (1) may, for example, be prepared as follows. It may be easily prepared by an addition reaction of 1 mol part of trimethylol propane, and 3 mol parts of xylylenediisocyanate in solvents such as ethyl acetate. Besides, the above-mentioned compound (2) may be, for example, prepared as follows. That is, they may be easily prepared by an addition reaction of 1 mol part of trimethylol propane and 3 mols of 2,4-tolylene diisocyanate in solvents such as ethyl acetate. In addition, a small amount of tin based catalysts for urethane formation reaction may be usable for the above-mentioned addition reaction.

The above-mentioned molar ratio [compound (1) / combination (2)] is preferably set as 100 / 0 - 30 / 70. Particularly preferable above-mentioned molar ratio [compound (1) / compound (2)] is in a range of 70 / 30 - 50 / 50. That is, a percentage of compound (1) less than 30 mol% (compound (2) exceeds 70 mol%) raises a temperature of starting rupture of the shell to high temperatures of no less than 165 degrees C, and sometimes shows a tendency of slow progress of a curing reaction of an adhesive film for die bonding.

Polyureas having isocyanate compounds as a constituent element such as the above-mentioned compound (1) and the above-mentioned compound (2), may be obtained by a reaction of isocyanate compounds and water. That is, hydrolysis of isocyanate compounds forms amines, and the resulting amines react with unreacted isocyanate groups (so-called self-polymerization addition reaction) to form the polyureas. Besides, preparation of the above-mentioned polyureas is not limited to the self-polymerization addition reaction of such isocyanate compounds, and they may be obtained also by, for example, polyaddition reaction of isocyanate compounds and multivalent amines.

Moreover, as polyureas, polyureas having the triisocyanate compound (3) represented with the above-mentioned general formula (3) as constituent element are excellent in storage stability, and preferable. Polyureas using the triisocyanate compound represented the above-mentioned general formula (3) are obtained by a same reaction described above.

Triisocyanate compounds (3) represented with the above-mentioned general formula (3) are isocyanurates having three isocyanate groups in a molecule. In addition, R in general formula (3) represents a bivalent organic group. As organic groups, for example, there may be mentioned linear or branched alkylene groups having a carbon number of about 1 to 10; phenylene group, arylene groups that may have alkyl group with a carbon number of about 1 to 3, etc. as a substituent. Moreover, alicyclic hydrocarbon groups etc. may be mentioned as organic groups. In detail, tris (6-isocyanylhexyl)isocyanurate, tris (isocyanylphenyl)isocyanurate, tris(isocyanyltolyl) isocyanurate, tris(m-isocyanylphenyl)isocyanurate, etc. may be mentioned. These may be used independently or two or more kinds may be used in

combination.

As preferable isocyanate compounds, compounds (1), (2), and (3) are illustrated as mentioned above. As isocyanate compounds other than the above mentioned examples, triisocyanate compounds represented with following Formula 25 may be mentioned.

**Chemical formula -- (25)**

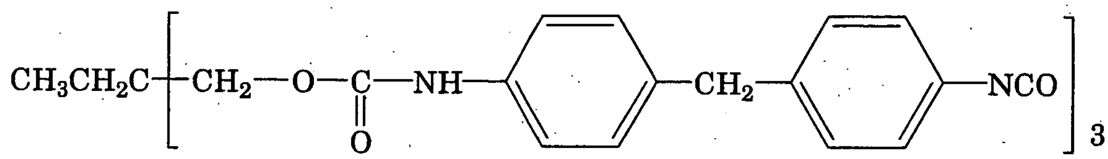

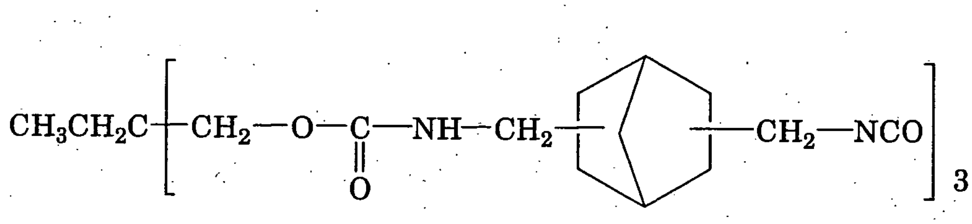

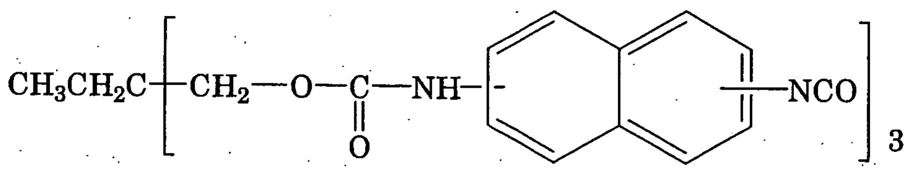

The above-mentioned multivalent amines may necessarily be compounds having two or more amino groups in a molecule. In detail, diethylenetriamine, triethylenetetramine, tetraethylenepentamine, 1,6-hexamethylenediamine, 1,8-octamethylene diamine, 1,12-dodeca methylene diamine, o-phenylenediamine, m-phenylenediamine, p-phenylenediamine, o-xylylene diamine, m-xylylene diamine, p-xylylene diamine, methane diamine, bis(4-amino-3-methylcyclohexyl)methane, isophorone diamine, 1,3-diamino cyclohexane, spiroacetal based diamines, etc. may be mentioned. These may be used independently or two or more kinds may be used in combination. Among them, in view of isolation capability (protection capability) of a shell part of a microcapsule formed, diethylene triamine, triethylene tetramine, and tetraethylene pentamine are preferable.

A method for preparing the above-mentioned microcapsule (D) including hardening accelerator is not especially limited, and the above-mentioned microcapsule may be prepared using conventionally well-known methods for various microencapsulation. It is especially preferable to form the shell part for microencapsulation using an interfacial polymerization method in the light of obtaining uniform shell part and of adjustment of thickness thereof.

The above-mentioned microcapsule (D) including hardening accelerator by an interfacial polymerization method, for example, may be obtained as follows. As an example, a case will be described that a polyurea, as a shell part, is formed using isocyanate compounds of the compound (1) and the compound (2). That is, isocyanate compounds of the compound (1) and the compound (2) are dissolved in a liquefied hardening accelerator as a core component. Thus obtained solution shows an oily state, which is dispersed in a state of oil droplet as an oil phase in a water phase to prepare an oil phase / water phase type emulsion. At this time, a particle diameter of each oil droplet currently dispersed is preferably about 0.05 - 50 micrometers, and more preferably about 0.05 - 20 micrometers in view of stability of the emulsion during polymerization.

On the other hand, in dissolving solid-shaped hardening accelerator in an organic solvent as a core component, an emulsion having solid phase / oil phase / water phase type may be obtained. Although this emulsion is hard to be formed in a type of the above-mentioned emulsion when the hardening accelerator has lipophilic property, in this case, an interfacial polymerization may just be performed, by adjusting solubility, as emulsion type of oil phase / oil phase type, and an emulsion type of solid phase / oil phase / oil phase type.

Furthermore, multivalent amines and polyhydric alcohols are added into a water phase of the above-mentioned emulsion, a polyaddition reaction by interfacial polymerization is performed with isocyanate compounds in the oil phase to obtain a microcapsule (D) including a hardening accelerator having a polyurea as a shell part.

Thus obtained microcapsule (D) including a hardening accelerator has a form of core/shell structure, and includes a hardening accelerator as a core component inside the shell part. This microcapsule (D) including a hardening

accelerator may be separated using various conventionally well-known means, for example such as means of drying after centrifugal separation, or of spray drying. Moreover, if needed, the organic solvent in the microcapsule may also be removed simultaneously using means such as reduced pressure and drying.

Besides, in the present invention, this microcapsule (D) including a hardening accelerator preferably has a spherical shape, and may have an elliptic shape. In the case where the microcapsule concerned does not have a spherical shape, but has a flat shape or an elliptic shape, and a particle diameter may not uniformly defined, an arithmetic average value of a longest diameter and a shortest diameter makes an average particle diameter.

An amount of a hardening accelerator included in a microcapsule (D) including a hardening accelerator is preferably set as 5 - 70% by weight of whole weight of the microcapsule (D), and more preferably it is 10 - 50% by weight. That is, when the amount of the hardening accelerator included is set as no less than 5% by weight, excellent period of curing reaction and reactivity will be obtained. On the other hand, an amount exceeding 70% by weight of the hardening accelerator included excessively decrease a thickness of a shell part, and there may be a possibility of deteriorating of isolation property of the included hardening accelerator (core part) and mechanical strength.

Especially the amount of the above-mentioned microcapsule (D) including a hardening accelerator used is not limited, but is preferably set as 0.5 - 6 parts by weight to 100 parts by weight of a sum total of an epoxy resin (A) and a phenol resin (B), and more preferably 1 - 4.5 parts by weight. That is, a usage of the microcapsule (D) including a hardening accelerator of no less than 0.5 parts by weight may realize excellent curing reactivity of an adhesive composition for die bonding. On the other hand, a usage of no more than 6 parts by weight may provide excellent storage stability.

Moreover, according to usage, inorganic fillers may be suitably blended together with the above-mentioned components (A) - (D) to an adhesive composition of the present invention. In order to aim at providing electric conductivity, improving thermal conductivity, at adjusting elastic modulus, etc., as the above-mentioned inorganic fillers, there may be mentioned, for example, ceramics such as silica, clay, gypsum, calcium carbonate, barium sulfate, oxidized aluminas, beryllium oxide, silicon carbides, and silicon nitrides; metals or alloys such as aluminium, copper, silver, gold, nickel, chromium, lead, tin, zinc, palladium, and solder; and in addition, various inorganic powders comprising carbon etc. These may be used independently or two or more kinds may be used in combination. Among them, silica, in particular, fused silica may suitably be used. Moreover, as inorganic fillers, it is preferable to use inorganic fillers having an average particle diameter of 0.1 - 80 micrometers.

An amount of blending of the above-mentioned inorganic fillers is preferably set to 0 - 80% by weight with respect to 100 parts by weight of an amount of a sum total of the epoxy resins (A), the phenol resins (B), and the synthetic rubbers (C), and more preferably 0 - 70% by weight.

Besides, other additives may be suitably blended to an adhesive composition of the present invention, if needed, in addition to the above-mentioned components (A) - (D) and inorganic fillers. As other additives, for example, various additives such as flame retardants, silane coupling agents, titanium based coupling agents, nonion based surface active agents, fluorosurfactants, silicone based additives, and ion trapping agents may be added, if needed.

As the above-mentioned flame retardants, antimony trioxide, antimony pentaoxide, brominated epoxy resins, etc. may be mentioned. These may be used independently or two or more kinds may be used in combination.

As the above-mentioned silane coupling agents, for example, β-(3,4-epoxycyclohexyl)ethyltrimethoxy silane, 7-glycidoxy propyl trimethoxy silane, 7-glycidoxy propylmethyl diethoxy silane, etc. may be mentioned. These may be used independently or two or more kinds may be used in combination.

As the above-mentioned ion trapping agents, for example, hydrotalcites, bismuth hydroxide, etc. may be mentioned. These may be used independently or two or more kinds may be used in combination.

An adhesive film of the present invention is producible, for example, as follows. That is, an adhesive composition in which a predetermined amount of each component of the above-mentioned components (A) - (D) and additional inorganic filler, if required, etc. are blended and dissolved into a conventionally well-known organic solvent, and they are uniformly mixed and dispersed using a dissolving apparatus to prepare an adhesive composition solution such as a liquefied varnish (dispersion liquid when using inorganic fillers). On the other hand, a supporting medium is prepared beforehand, on which the above-mentioned adhesive composition solution is coated using a conventionally well-known coater etc., and then dried. And an adhesive composition formed on the above-mentioned supporting medium is separated from the supporting medium to obtain a target adhesive film.

As the above-mentioned dissolving apparatus, for example, flask apparatus, homomixer apparatus, etc. may be mentioned. Moreover, the above-mentioned coater preferably has a circulating hot air dryer. Preferably, in view of safety and environmental preservation, a ventilation duct, a solvent recovery apparatus, etc. may be attached in the above-mentioned dissolving apparatus and a coater during operations.

The above-mentioned supporting medium is not especially limited, and for example, an insulating film, a metallic foil, etc. may be mentioned.

As insulating film base materials, any insulating film materials may be used, as long as they have heat resistance and chemical resistance such as polyimide based materials, polyester based materials, polyethylene terephthalate based materials, film base materials made of fluororesins, etc. Besides, both of film base materials having silicone treatment given to a surface thereof, and film base materials without the treatment may be used. Furthermore, as the above-mentioned insulating film base materials, a polyethylene terephthalate base material is preferable.

Besides, as metals for metallic foils, aluminium, copper, silver, gold, nickel, indium, chromium, lead, tin, zinc, palladium, etc. may be mentioned. They may be used independently, or may be used in a shape of alloy.

The above-mentioned insulating films and metallic foils may be used independently, respectively, or they may be used in a shape of double-layered base materials such as metallic foil / insulating film, where no less than two of them are laminated together. As such double-layered base materials, a copper / polyimide double-layered base material may be mentioned.

As the above-mentioned organic solvents, they are not especially limited as long as they are organic solvents that may dissolve each component as a formation material of an adhesive composition, and solvents having low boiling points are preferably used. As the above-mentioned organic solvents, ketones, glycol diether based solvents, nitrogen containing solvents, etc. may be mentioned. These may be used independently or two or more kinds may be used in combination. Besides, hydrocarbon based solvents, ester based solvents, and polyhydric alcohol derivatives may be used as a part of organic solvents in a range that does not impair solubility of each component of the adhesive composition.

The above-mentioned ketone based solvents are not especially limited. For example, methyl ethyl ketone, diethyl ketone, methyl-n-butyl ketone, methyl isobutyl ketone, methyl-n-propyl ketone, di-n-propyl ketone, cyclohexanone, acetophenone, etc. may be mentioned. These may be used independently or two or more kinds may be used in combination. Among them, from a viewpoint of promotion of vaporising rate, methyl ethyl ketone, methyl isobutyl ketone, cyclohexanone, and acetophenone may suitably be used.

The above-mentioned glycol diether based solvents are not especially limited. For example, ethylene glycol dimethyl ether, diethylene glycol dimethyl ether, triethylene glycol dimethyl ether, etc. may be mentioned. These may be used independently or two or more kinds may be used in combination.

The above-mentioned hydrocarbon based solvents are not especially limited. For example, toluene, xylene, etc. may be mentioned. The above-mentioned ester based solvents are not especially limited, and, for example, ethyl acetate, butyl acetate, etc. may be mentioned. The above-mentioned polyhydric alcohol derivatives are not especially limited, and, for example, propylene glycol monomethyl ether acetate etc. may be mentioned. These may be used independently or two or more kinds may be used in combination.

A thickness of an adhesive film of the present invention is, in general, 1 - 200 micrometers. The adhesive film may have both shape of a sheet and a tape. Besides, a shape and a size of the adhesive film may be suitably varied according to adherends such as a lead frame and a semiconductor chip. Besides, an adhesive film is beforehand formed in a shape of a film, which may be laminated on the above-mentioned supporting medium with pressing etc.

The above-mentioned adhesive film may be used in a shape of a laminated adhesive film which is laminated a pressure sensitive adhesive film (a pressure sensitive adhesive layer). The above-mentioned adhesive film may be used as an adhesive film for die bonding. The above-mentioned laminated adhesive film may be used as an adhesive film for dicing, and die bonding.

In a laminated adhesive film, an adhesive film is usually laminated on a pressure sensitive adhesive film prepared on a support base material. That is, in the laminated adhesive film, each film is laminated in an order of a support base material / a pressure sensitive adhesive film / an adhesive film.

Pressure sensitive adhesives used for formation of pressure sensitive adhesive films are not especially limited, but various pressure sensitive adhesives may be used. Especially, radiation-curing type pressure sensitive adhesives may be suitably used. In the radiation-curing type pressure sensitive adhesives, adhesive power is easily reduced by increase of cross linking degree with exposure of radiation such as ultraviolet radiation.

As radiation-curing type pressure sensitive adhesives, pressure sensitive adhesives having functional groups showing radiation-curing property such as carbon-carbon double bond, and showing tackiness may be used without any limitation. As radiation-curing type pressure sensitive adhesives, for example, additive type radiation-curing property pressure sensitive adhesives may be mentioned, in which monomer components and oligomer components showing radiation-curing property are blended with commonly used pressure-sensitive adhesives such as the above-mentioned acrylic based pressure sensitive adhesives and rubber based pressure sensitive adhesives. In adhesive films for dicing and die bonding, as the above-mentioned pressure-sensitive adhesives, since electronic parts in which contamination has to be avoided such as semiconductor wafers and glasses, must be extremely cleanly washed by organic solvents such as ultrapure water and alcohol, acrylic based pressure sensitive adhesives having acrylic based polymers as a base polymer are preferable.

As the above-mentioned acrylic based polymers, for example, acrylic based polymers obtained using one kind or two or more kinds as a monomer component may be mentioned, the monomer component used here including: (meth)acrylic acid alkyl esters (for example, linear or branched alkyl esters of alkyl groups having carbon numbers of 1 - 30, especially carbon numbers of 4 - 18 etc. such as, methyl ester, ethyl ester, propyl ester, isopropyl ester, butyl

ester, isobutyl ester, s-butyl ester, t-butyl ester, pentyl ester, isopentyl ester, hexyl ester, heptyl ester, octyl ester, 2-ethylhexyl ester, iso octyl ester, nonyl ester, decyl ester, isodecyl ester, undecyl ester, dodecyl ester, tridecyl ester, tetradecyl ester, hexadecyl ester, octadecyl ester, eicosyl ester, etc.); and (meth)acrylic acid cycloalkyl esters (for example, cyclopentyl ester, cycl hexyl ester, etc.) Furthermore, (meth)acrylic acid ester means acrylic acid esters and/or methacrylic acid esters, and all expressions of (meth) in the present invention have a same meaning.

The above-mentioned acrylic based polymers may include, if needed, a unit corresponding to other monomer components being compolymerizable with the above-mentioned (meth)acrylic acid alkyl esters or cyclo alkyl esters, for the purpose of modification for such as, force of coagulation and heat resistance. As such monomer components, for example, there may be mentioned: carboxyl group-containing monomers such as acrylic acid, methacrylic acid, carboxyethyl (meth)acrylate, carboxypentyl (meth)acrylate, itaconic acid, maleic acid, fumaric acid, and crotonic acid; acid anhydride monomers such as maleic anhydride and itaconic anhydride; hydroxyl group containing monomers such as (meth)acrylic acid 2-hydroxy ethyl, (meth)acrylic acid 2-hydroxypropyl, (meth)acrylic acid 4-hydroxybutyl, (meth)acrylic acid 6-hydroxyhexyl, (meth)acrylic acid 8-hydroxyoctyl, (meth)acrylic acid 10-hydroxydecyl, (meth)acrylic acid 12-hydroxylauryl, and (4-hydroxymethylcyclohexyl)methyl(meth)acrylate; sulfonic acid group containing monomers such as styrene sulfonic acid, allyl sulfonic acid, 2-(meth)acrylamide-2-methyl propane sulfonic acid, (meth)acrylamide propane sulfonic acid, sulfo propyl (meth)acrylate, and (meth)acryloyloxynaphthalene sulfonic acid; phosphate group containing monomers such as 2-hydroxy ethyl acryloyl phosphate; and acrylamide, acrylonitrile. One kind or two or more kinds of these copolymerizable monomer components may be used. An amount of these copolymerizable monomers used is preferably no more than 40% by weight of all monomer components.

Furthermore, the above-mentioned acrylic based polymers may include polyfunctional monomers for cross-linking etc., as monomer components for copolymerization, if needed. As such polyfunctional monomers, for example, there may be mentioned: hexane diol di(meth)acrylate, (poly)ethylene glycol di(meth)acrylate, (poly)propylene glycol di(meth)acrylate, neopentyl glycol di(meth)acrylate, and pentaerythritol di(meth)acrylate, trimethylol propane tri(meth) acrylate, pentaerythritol tri(meth)acrylate, dipentaerythritol hexa (meth)acrylate, epoxy (meth)acrylate, polyester (meth) acrylate, and urethane (meth)acrylate. On kind or two or more kinds of these polyfunctional monomers may be used. An amount of usage of the polyfunctional monomer is preferably no more than 30% by weight of all monomer components in view of pressure sensitive adhesive property etc.

The above-mentioned acrylic based polymers are obtained by polymerizing a single monomer or two or more kinds of monomer mixtures. Polymerization may also be performed by any methods such as solution polymerization, emulsion polymerization, block polymerization, and suspension polymerization. In view of contamination control to clean adherends, small content of low molecular weight material is preferable. From this point of view, a number average molecular weight of the acrylic based polymer is preferably no less than 300,000, and more preferably about 400,000 to about 3,000,000.

Besides, for the purpose of increasing a number average molecular weight such as of acrylic based polymers as base polymers, external cross linking agents may also suitably be used to the above-mentioned pressure sensitive adhesives. Detailed means for external cross-linking method includes methods of reaction by addition of so-called cross linking agents such as polyisocyanate compounds, epoxy compounds, aziridine compounds, and melamine based cross linking agents. In case of using external cross linking agents, an amount used is suitably determined based on a balance with a base polymer to be cross linked, furthermore, based on usage as a pressure sensitive adhesives. In general, a blending amount is preferably no more than about 5 parts by weight to the above-mentioned base polymer 100 parts by weight, and more preferably 0.1 - 5 parts by weight. Furthermore, to pressure sensitive adhesive, additives such as various kinds of conventionally well-known tackifiers and antioxidants, may be used in addition to the above-mentioned component as occasion demands.

As monomer components with radiation-curing property to be blended, for example, there may be mentioned: urethane oligomers, urethane (meth)acrylates, trimethylol propane tri (meth)acrylate, tetramethylolmethane tetra (meth)acrylate, pentaerythritol tri(meth)acrylate, pentaerythritol tetra(meth)acrylate, dipentaerythritol monohydroxy penta(meth)acrylate, dipentaerythritol hexa(meth)acrylate, 1,4-butanediol di(meth)acrylate, etc. Besides, as oligomer components with radiation-curing property, various oligomers such as urethane based, polyether based, polyester based, polycarbonate based, and polybutadiene based, may be mentioned, and their molecular weight is preferably in a range about 100 to 30000. In an amount of blending of monomer components or oligomer components with radiation-curing property, an amount that may decrease adhesive power of pressure sensitive adhesive layers is suitably determined according to types of the above-mentioned pressure sensitive adhesive layers. In general, the amount is about, for example, 5 - 500 parts by weight to a base polymer such as acrylic based polymer constituting the pressure sensitive adhesive 100 parts by weight, and preferably 40 - 150 parts by weight.

Besides, as radiation-curing type pressure sensitive adhesives, other than the above-mentioned addition type radiation-curing property pressure sensitive adhesives, radiation-curing property pressure sensitive adhesives using polymers having carbon-carbon double bonds in a side chain or in a principal chain thereof, or at an end of the principal chain may be mentioned, as base polymer. Indwelling type radiation-curing property pressure sensitive adhesives do

not need to include oligomer components as low molecule components, or do not include much of them, which may preferably form a pressure sensitive adhesive layer having a stable layer structure without allowing oligomer components etc. to move inside of the pressure sensitive adhesive with time.

As base polymers having the above-mentioned carbon-carbon double bonds, polymers having carbon-carbon double bonds and tackiness may be used without particular limitation. As such base polymers, polymers having acrylic based polymers as a basic skeleton are preferable. As basic skeletons of acrylic based polymers, acrylic based polymers illustrated above may be mentioned.

Methods of introducing carbon-carbon double bonds into the above-mentioned acrylic based polymers are not especially limited, but various methods may be adopted. Carbon-carbon double bonds may be introduced into polymer side chains from a viewpoint of molecular design. For example, a method may be mentioned in which a monomer having functional groups is beforehand copolymerized to an acrylic based polymer, and subsequently, a compound that has functional groups having reactivity with the functional groups, and has carbon-carbon double bonds is condensed or added to the above-mentioned polymer obtained beforehand, while maintaining radiation-curing property of the carbon-carbon double bond.

As examples of combination of these functional groups, carboxylic acid group and epoxy group; carboxylic acid group and aziridy group; and hydroxyl group and isocyanate group, etc. may be mentioned. Among combinations of these functional groups, taking ease of reaction tracing into consideration, a combination of hydroxyl group and isocyanate group is suitable. Besides, either of acrylic based polymer and the above-mentioned compound may have the functional group, as long as a combination of these functional groups is a combination that forms an acrylic based polymer having the above-mentioned carbon-carbon double bonds. As the above-mentioned preferable combination, a combination is suitable wherein the acrylic based polymer has hydroxyl groups and the above-mentioned compound has isocyanate groups. Here, as isocyanate compounds having carbon-carbon double bonds, for example, methacryloyl isocyanate, 2-methacryloyloxyethyl isocyanate, and m-isopropenyl-$\alpha,\alpha$-dimethyl benzyl isocyanate etc. may be mentioned. Moreover, as acrylic based polymers, polymers obtained by copolymerization of ether based compounds such as the above-mentioned monomers containing hydroxy group, and ether based compounds such as 2-hydroxyethylvinyl ether, 4-hydroxybutylvinyl ether, and diethyleneglycol monovinyl ether, may be used.

The base polymer (particularly an acrylic based polymer) having the above-mentioned carbon-carbon double bonds may be independently used in the indwelling type radiation-curing property pressure sensitive adhesive, and the monomer component and oligomer component having radiation-curing property may be blended with it in a range that does not deteriorate characteristics. An amount of the oligomer component having radiation-curing property etc. is usually within the range of 30 parts by weight to the base polymer 100 parts by weight part, and preferably in the range of 0 - 10 parts by weight part.

Photopolymerization initiators may be included in the above-mentioned radiation-curing type pressure sensitive adhesives in case of curing by ultraviolet radiation etc. As photopolymerization initiators, for example, there may be mentioned: $\alpha$-ketol based compounds such as 4-(2-hydroxyethoxy) phenyl(2-hydroxy-2-propyl)ketone, $\alpha$-hydroxy-$\alpha$, $\alpha'$-dimethyl acetophenone, 2-methyl-2-hydroxy propiophenone, 1-hydroxy cyclohexyl phenyl ketone; acetophenone based compound such as methoxy acetophenone, 2,2-dimethoxy-2-phenyl acetophenone, 2,2-diethoxy acetophenone, 2-methyl-1-[4-(methyl thio)-phenyl]-2-morpholino propane-1; benzoin ether based compound such as benzoin ethyl ether, benzoin isopropyl ether, and anisoin methyl ether; ketal based compounds such as benzyl dimethyl ketal; aromatic sulfonylchloride based compounds such as 2-naphthalene sulfonylchloride; optical active oxime based compounds such as 1-phenone-1,1-propanedione-2-(o-ethoxy carbonyl)oxime; benzophenone based compounds such as benzophenone, benzoylbenzoic acid, 3,3'-dimethyl-4-methoxy benzophenone; thioxanthone based compounds such as thioxanthone, 2-chloro thioxanthone, 2-methyl thioxanthone, 2,4-dimethyl thioxanthone, isopropyl thioxanthone, 2,4-dichloro thioxanthone, 2,4-diethyl thioxanthone, 2,4-diisopropyl thioxanthone; camphor quinone; halogenated ketones; acyl phosphinoxide; and acyl phosphonate etc. An amount of blending of photopolymerization initiators is approximately 0.05 - 20 parts by weight to the base polymers such as acrylic based polymer constituting pressure sensitive adhesives 100 parts by weight.

Moreover, as radiation-curing type pressure sensitive adhesives, for example, there may be mentioned: rubber pressure sensitive adhesives, acrylic based pressure sensitive adhesives, etc: disclosed in Japanese Patent Laid-Open No. 60-196956 official gazette, including addition-polymerizable compounds having two or more unsaturated bonds, photopolymerizable compounds such as alkoxy silanes having epoxy groups; and photopolymerization initiators such as carbonyl compounds, organosulfur compounds, peroxides, amines, and onium salt based compounds.

A thickness of the above-mentioned pressure sensitive adhesive film is not especially limited, but it is about 1 - 50 micrometers, preferably is 2 - 30 micrometers, and more preferably 5 - 25 micrometers.

A support base material with which pressure sensitive adhesive film is laminated atcs a base of strength of adhesive film for dicing and die bonding. For example, there may be mentioned: polyolefines such as low density polyethylenes, linear polyethylenes, medium density polyethylenes, high density polyethylenes, super-low density polyethylenes, random-copolymerized polypropylenes, block-copolymerized polypropylenes, homopolyprolenes, polybutenes, poly methyl pentenes; polyesters such as ethylene-vinylacetate copolymesr, ionomer resins, ethylene-(meth) acrylic acid copolymers, ethylene-(meth)acrylic acid ester (random, alternate) copolymers, ethylene-butene copolymers, ethylene-hexene copolymers, polyurethanes, polyethylene terephthalates, polyethylenenaphthalates; polycarbonates; polyimides; polyetheretherketones; polyether imides; polyamides; all-aromatic polyamides; polyphenyl sulfides; aramides (paper); glass; glass cloths; fluororesins; polyvinyl chlorides; polyvinylidene chlorides; cellulose based resins; silicone resins; metal (foils); and papers etc.

Moreover, as materials for support base materials, polymers such as cross-linked polymers of the above-mentioned resins, may be mentioned. The above-mentioned plastic films may be used in a un-drawn state, and plastic films processed by uniaxial or biaxial drawing is used, if needed. When a resin sheet having thermal shrinking property given by a stretching processing etc. is used, the support base material is shrunk with heat after dicing, and thereby, an adhesion area between the pressure sensitive adhesive film and the adhesive film is reduced, which makes recovery of chip-shaped work piece easier.

In order to increase adhesive ability, supporting ability, etc. with an adjoining layer, commonly used surface treatment, for example, a chemical or physical treatment such as chromate treatment, ozone exposure treatment, flame exposure treatment, high voltage electric shock exposure treatment, ionization radiation treatment, etc.; and a coating process by anchor coat primers (for example, adhesion material mentioned later) may be provided to a surface of a support base material.

As the above-mentioned support base materials, materials of a same kind or of different kinds may be suitably selected to be used, and support base materials in which several kinds are mutually blended may be used if needed. Moreover, in order to give antistatic ability to the support base materials, a vapor depositioned layer of conductive materials having about 30 - 500 Å of thickness comprising metals, alloys, oxides thereof, etc. may be prepared on the above-mentioned support base materials. Support base materials may be mono-layered or multi-layered constituted by two or more kinds of materials. Furthermore, when the pressure sensitive adhesive film is of radiation-curing type, materials is used that transmits at least a part of radiation such as X-ray, ultraviolet radiation, and electron rays.

A thickness of the support base material is not especially limited but is suitably determined, and in general it is about 5 - 200 micrometers.

Next, description will be given about a method for adhering semiconductor elements using an adhesive film for die bonding of the present invention. An adhesive film for die bonding of the present invention preferably has a shape of a ribbon currently wound around a reel etc. in a state of long tape. This is cut into predetermined dimensions (length, shape, etc.) using proper means such as a cutter to provide an adhesive layer having excellent uniformity of, such as thickness and quantity.

Thus obtained cut piece is temporarily adhered on a die pad of electrode members, for example, a lead frame, on which a semiconductor chip is laid and is heated. In heat-treatment, for example, well-known suitable means such as electron tube heater, ultrasonic wave heater, and ultraviolet radiation heater, may be used. Heating temperatures are usually 50 - 300 degrees C, and preferably 100 - 250 degrees C. Heating period is usually 0.1 seconds to 30 minutes, and preferably 0.5 seconds - 3 minutes. Such heating will cure epoxy resins in the adhesive layer (A), and firmly adhere a semiconductor chip with electrode members.

Moreover, an adhesive ilm of the present invention may be used as an adhesive film for dicing and die bonding. A die bond adhesive film is fixed on an apparatus for temporary adhesion, and one side of the silicon wafer is temporarily adhered, at room temperature - 90 degree C, to the adhesive film for die bonding and then fixed. Subsequently, when the adhesive film for die bonding is simply an adhesive film itself, the above-mentioned pressure sensitive adhesive film for dicing (pressure sensitive adhesive film is formed on the above-mentioned support base material) may be attached on a surface of the adhesive film for die bonding. Furthermore, when an adhesive film for dicing and die bonding in which an adhesive film for die bonding and a pressure sensitive adhesive film are laminated together is used, the process for attaching the above-mentioned pressure sensitive adhesive film for dicing is not required.

Subsequently, using dicing apparatus, the silicon wafer having the adhesive film for dicing and die bonding temporarily adhered is cut to obtain semiconductor chips. Then, an interface between the pressure sensitive adhesive film and the adhesive film is separated to obtain semiconductor chips holding the adhesive film for die bonding (adhesive layer). When the pressure sensitive adhesive film is formed of a radiation-curing type pressure sensitive adhesive, an adhesive power of the interface is reduced by exposure of radiation. The semiconductor chip having the adhesive layer temporarily adhered thereon is placed on a die pad of the electrode member, for example, a lead frame, and then heated. Furthermore, heat-treatment may usually be performed using a same means and process conditions as mentioned above.

Besides, although a semiconductor wafer was illustrated as a body to be cut in the above-mentioned paragraph, as the body to be cut, multilayered substrates, collectively sealed modules, etc. may be mentioned in addition to the above-mentioned example. Moreover, as semiconductor elements, TAB films, substrates, or chip-shaped work pieces may be mentioned, other than lead frames etc.

EXAMPLES

Description of the present invention will, hereinafter, be given, referring to Examples and Comparative examples. Besides, part represents part by weight in each Example. Microcapsules including the hardening accelerators used in each Example were prepared in manufacturing examples bellow. Moreover, components used in each Example are shown below.

Manufacturing example 1: [production of microcapsules including hardening accelerator (D1)]

The above-mentioned interfacial-polymerization method was used for production. It will be described below in more detail. The above-mentioned triisocyanate compound (1) 10.5 parts and the above-mentioned triisocyanate compound (2) 6.6 parts, triphenyl phosphine 6.7 parts as a hardening accelerator, and ethyl acetate 4.8 parts were uniformly dissolved together to prepare an oil phase. Here, a molar ratio of the above-mentioned compound (1) and compound (2) is [compound (1) / compound (2)] = 6 / 4. Moreover, a water phase consisting of distilled water 95 parts, and polyvinyl alcohol 5 parts were separately prepared, into which the oil phase prepared as mentioned above was added to obtain an emulsion state that was emulsified with homomixer (8000 rpm). This was introduced into a polymerization reactor equipped with a reflux tube, an agitator, and a dropping funnel.

On the other hand, an aqueous solution 13 parts including triethyl tetramine 3 parts was prepared and introduced in the dropping funnel of the above-mentioned polymerization reactor, and the aqueous solution was dropped into the emulsion in the reactor and polymerized at 70 degrees C for 3 hours to produce microcapsules. Thus, microcapsules (an average particle diameter of 2 micrometers) including triphenyl phosphine in a core part thereof and having polyurea as a shell structure thereof were manufactured.

Manufacturing example 2: [production of microcapsule including hardening accelerator (D2)]

Except that a molar ratio of the above-mentioned compound (1) and compound (2) was set as a ratio of compound (1) / [compound (2)] = 7 / 3 in the Manufacturing example 1, a same method as in Manufacturing example 1 was repeated to manufacture microcapsules including hardening accelerator (D2).

Manufacturing example 3: [production of microcapsules including hardening accelerator (D3)]

The above-mentioned interfacial-polymerization method was used for production. It will be described below in more detail. Tris(4-isocyanyltolyl) isocyanurate 15.1 parts as a triisocyanate compound (3) represented with the general formula (3), and triphenyl phosphine 6.7 parts as a hardening accelerator, and ethyl acetate 4.8 parts were uniformly dissolved together to prepare an oil phase. Moreover, a water phase consisting of distilled water 95 parts, and polyvinyl alcohol 5 parts were separately prepared, into which the oil phase prepared as mentioned above was added to obtain an emulsion state that was emulsified with homomixer (8000 rpm). This was introduced to a polymerization reactor equipped with a reflux tube, an agitator, and a dropping funnel.

On the other hand, an aqueous solution 13 parts including triethyl tetramine 3 parts was prepared and introduced in the dropping funnel of the above-mentioned polymerization reactor, and the aqueous solution was dropped into the emulsion in the reactor and polymerized at 70 degrees C for 3 hours to produce microcapsules. Thus, microcapsules (average particle diameter of 2 micrometers) including triphenyl phosphine in a core part thereof and having polyurea as a shell structure thereof were manufactured.

Manufacturing example 4: [production of microcapsules including hardening accelerator (D4)]

Except for having used tris(m-isocyanylphenyl)isocyanurate as a triisocyanate compound (3) represented with the general formula (3) in the Manufacturing example 3, a same method as in Manufacturing example 3 was repeated to manufacture microcapsules including hardening accelerator (D4).

[Epoxy resin (A)]

A1: a novolak type epoxy resin represented with the general formula (4) (where, R represents $-CH_3$ and n represents an integer of 1 or more, epoxy equivalent 195 g/eq, and softening point 80 degrees C)

A2: a biphenyl type epoxy resin represented with the general formula (5) (where, R represents $-CH_3$, epoxy equivalent 190 g / eq, and softening point 105 degrees C)

A3: a tris hydroxy phenyl methane type epoxy resin represented with general formula (6) (where, R represents - H, n represents an integer of 0 or 1 or more, epoxy equivalent 174 g/eq, and softening point 53 degrees C)

A4: a tetra phenylol ethane type epoxy resin represented with the general formula (7) (where, both of $R_1$ and $R_2$ represent H, epoxy equivalent 187 g/eq, and softening point 82 degrees C)

[Phenol resin (B)]

B1: a phenol novolak resin represented with the general formula (8) (where, n represents an integer of 0 or 1 or more, hydroxyl equivalent 106 g/eq, and softening point 60 degrees C)
B-2: a phenol aralkyl resin represented with general formula (9) (where, n represents an integer of 0 or 1 or more, hydroxyl equivalent 175 g/eq, and softening point 60 degrees C)

[Synthetic rubber (C)]

C1: acrylonitrile-butadiene rubber having a repeating unit represented with the general formula (10) as a principal constituent (where, acrylonitrile content 40% by weight)
C2: carboxylated acrylonitrile-butadiene rubber having a repeating unit represented with the general formula (11) as a principal constituent (where, R represents - $CH_3$, acrylonitrile content 27% by weight, an amount of bonding carboxyl groups 0.027 equivalents / 100g)
C3: carboxylated acrylic rubber having a repeating unit represented with the following structural formula (12) as a principal constituent (where, R represents -$CH_2CH_3$, Mooney viscosity 40 poise)

[Hardening accelerator (E)]

E1: triphenyl phosphine
E2: tetraphenyl phosphonium tetraphenyl borate
E3: 1,8-diazabicyclo[5,4,0]undecene-7

[Inorganic filler]

Spherical fused silica having an average particle diameter of 0.5 micrometers

Examples 1-18, Comparative examples 1-4

Each of the above-mentioned components was blended at percentages shown in following Table 1 and Table 2, dissolved using methyl ethyl ketone in a glass flask with agitating apparatus to prepare adhesive composition solutions (20% by weight of concentration). Subsequently, the adhesive composition solutions were coated onto a polyethylene terephthalate base material (thickness of 50 micrometers) in which siliconization had been given on a surface thereof, using a coater of comma method, and heated and dried at 120 degrees C. Subsequently, it was separated from the above-mentioned polyethylene terephthalate base material to prepare an adhesive film having required thickness of 25 micrometers.

[Table 1]

(Part)

| | | Example | | | | | | | | | Comparative example | | | |
|---|---|---|---|---|---|---|---|---|---|---|---|---|---|---|
| | | 1 | 2 | 3 | 4 | 5 | 6 | 7 | 8 | 9 | 1 | 2 | 3 | 4 |
| Epoxy resin (A) | A1 | 49.8 | - | - | - | - | - | - | - | - | - | - | - | 49.8 |
| | A2 | - | 56.2 | - | - | - | - | - | - | - | - | - | - | - |
| | A3 | - | - | 47.1 | - | 34.9 | 47.1 | 34.9 | 34.9 | 34.9 | 47.1 | 47.1 | 47.1 | - |
| | A4 | - | - | - | 49.1 | - | - | - | - | - | - | - | - | - |
| Phenol resin (B) | B1 | - | - | - | - | - | 29.9 | - | - | - | - | - | - | - |
| | B2 | 27.2 | 20.8 | 29.9 | 27.9 | 22.1 | - | 22.1 | 22.1 | 22.1 | 29.9 | 29.9 | 29.9 | 27.2 |
| Synthetic rubber (C) | C1 | - | - | - | - | - | - | - | - | 20 | - | - | - | - |
| | C2 | - | - | - | - | - | - | - | 20 | - | - | - | - | - |
| | C3 | 20 | 20 | 20 | 20 | 20 | 20 | 20 | - | - | 20 | 20 | 20 | 20 |
| Microcapsule including hardening accelerator (D) | D1 | 3 | 3 | 3 | 3 | 3 | 3 | - | 3 | 3 | - | - | - | - |
| | D2 | - | - | - | - | - | - | 3 | - | - | - | - | - | - |
| Hardening accelerator (E) | E1 | - | - | - | - | - | - | - | - | - | 3 | - | - | 3 |

| | | | | | | | | | | | | | | |
|---|---|---|---|---|---|---|---|---|---|---|---|---|---|---|
| | E 2 | - | - | - | - | - | - | - | - | - | - | 3 | - | - |
| | E 3 | - | - | - | - | - | - | - | - | - | - | - | 3 | - |
| Inorganic filler | | - | - | - | - | 20 | - | - | - | - | - | - | - | - |

[Table 2]

| | | Example | | | | | | | | |
|---|---|---|---|---|---|---|---|---|---|---|
| | | 10 | 11 | 12 | 13 | 14 | 15 | 16 | 17 | 18 |
| Epoxy resin (A) | A1 | 49.8 | - | - | - | - | - | - | - | - |
| | A2 | - | 56.2 | - | - | - | - | - | - | - |
| | A3 | - | - | 47.1 | - | 34.9 | 47.1 | 34.9 | 34.9 | 34.9 |
| | A4 | - | - | - | 49.1 | - | - | - | - | - |
| Phenol resin (B) | B1 | - | - | - | - | - | 29.9 | - | - | - |
| | B2 | 27.2 | 20.8 | 29.9 | 27.9 | 22.1 | - | 22.1 | 22.1 | 22.1 |
| Synthetic rubber (C) | C1 | - | - | - | - | - | - | - | - | 20 |
| | C2 | - | - | - | - | - | - | - | 20 | - |
| | C3 | 20 | 20 | 20 | 20 | 20 | 20 | 20 | - | - |
| Microcapsule including hardening accelerator (D) | D3 | 3 | 3 | 3 | 3 | 3 | 3 | - | 3 | 3 |
| | D4 | - | - | - | - | - | - | 3 | - | - |
| Inorganic filler | | - | - | - | - | 20 | - | - | - | - |

In accordance with criteria shown below using obtained adhesive films of Examples 1 - 18 and Comparative examples 1 - 4, evaluation of shear adhesive strength before and after preservation was performed. Table 3 and Table 4 show results.

(Shear adhesive strength measurement)

Shear adhesive strength between adhesive films and silicon chips was measured as follows. That is, the obtained adhesive film, after being separated from a separator, was cut by a square having 3 cm of sides. This film was sandwitched between a silicon chip (passivation: silicon nitride) diced to a dimension of 2 mm x 2 mm x 760 micrometers, and a glass epoxy substrate having a dimension of 3 cm x 5 cm. It was heated and adhered, using a flip chip bonder (manufactured by SHIBUYA KOGYO CO.,LTD., DB100) under conditions of temperature of 100 - 150 degrees C and a load (0.25MPa) for 1 second. After further curing for 60 minutes at 150 degrees C using a hot air drying equipment, a shear adhesive strength was measured at ordinary temperature (23 degrees C).

(Preservation quality evaluation)

The adhesive films were kept standing for one week under a condition of a temperature of 40 degrees C. The adhesive films after being kept standing were measured for a shear adhesive strength using a same method described above. A shear adhesive strength retention (%) was calculated by following equation using the above-mentioned initial shear adhesive strength and shear adhesive strength after preservation. Shear adhesive strength

retention (%) = ((shear adhesive strength after preservation) /

(initial shear adhesive strength)) x 100

[Table 3]

| | | | Example | | | | | | | | | Comparative example | | | |
|---|---|---|---|---|---|---|---|---|---|---|---|---|---|---|---|
| | | | 1 | 2 | 3 | 4 | 5 | 6 | 7 | 8 | 9 | 1 | 2 | 3 | 4 |
| Shear adhesive strength (MPa) | Adhesion temperature (°C) | 100 | 15.2 | 13.4 | 14.6 | 15.5 | 13.4 | 15.8 | 14.0 | 14.8 | 15.2 | 14.2 | 15.4 | 15.6 | 13.4 |
| | | 150 | 18.2 | 17.5 | 17.8 | 18.8 | 16.6 | 19.0 | 17.3 | 17.2 | 17.8 | 16.2 | 17.5 | 16.8 | 18.2 |
| Shear adhesive strength retention (%) | Adhesion temperature (°C) | 100 | 95 | 92 | 97 | 98 | 94 | 95 | 93 | 93 | 96 | 45 | 38 | 54 | 44 |
| | | 150 | 98 | 94 | 94 | 97 | 92 | 94 | 97 | 98 | 94 | 52 | 49 | 39 | 51 |

[Table 4]

| | | | Example | | | | | | | | |
|---|---|---|---|---|---|---|---|---|---|---|---|
| | | | 10 | 11 | 12 | 13 | 14 | 15 | 16 | 17 | 18 |
| Shear adhesive strength (MPa) | Adhesion temperature (°C) | 100 | 15.2 | 14.5 | 15.2 | 14.8 | 16.2 | 14.8 | 15.3 | 15.7 | 14.7 |
| | | 150 | 17.8 | 17.3 | 17.9 | 18.1 | 16.8 | 19.0 | 17.5 | 17.3 | 18.3 |
| Shear adhesive strength retention (%) | Adhesion temperature (°C) | 100 | 96 | 94 | 95 | 95 | 95 | 92 | 98 | 97 | 97 |
| | | 150 | 98 | 95 | 96 | 98 | 93 | 93 | 95 | 96 | 96 |

Results of the above-mentioned Table 3 and Table 4 show that all examples give high initial shear adhesive strengths, and high shear adhesive strength retentions (%). However the results show that comparative examples in which microcapsules including hardening accelerator are not used give sufficiently high initial shear adhesive strength as in examples, but give low shear adhesive strength retentions (%).

## Claims

1. An adhesive composition comprising epoxy resins (A), phenol resins (B), synthetic rubber (C), and microcapsules (D) including the hardening accelerator that has a core/shell structure in which a core part including the hardening accelerator is covered by a shell part formed with thermoplastic resins.

2. The adhesive composition according to Claim 1, wherein a shell part of the microcapsule (D) including the hardening accelerator is formed with a polyurea having an isocyanate compound using a triisocyanate compound (1) represented with following chemical formula (1), and a triisocyanate compound (2) represented with following chemical formula (2) at a percentage of a mixed molar ratio of (compound (1)) / (compound (2)) = 100 / 0 - 30 / 70 as a constituent element.

**Chemical formula -- (1)**

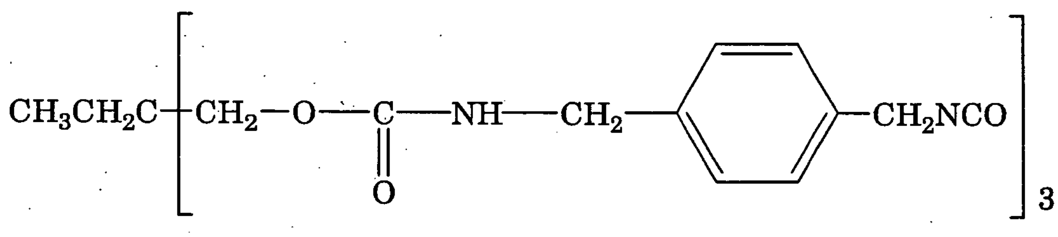

**Chemical formula -- (2)**

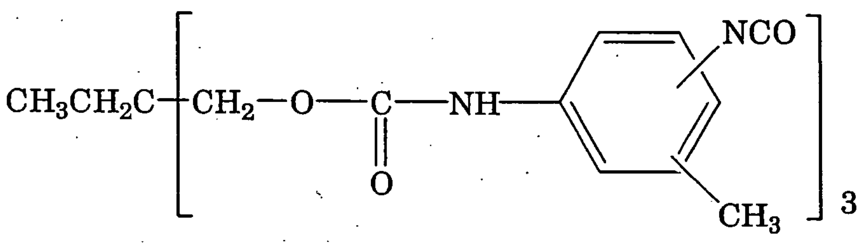

3. The adhesive composition according to Claim 1, wherein a shell part of the microcapsule (D) including the hardening accelerator is formed with a polyurea having a triisocyanate Compound (3) represented with following general formula (3) (where, R represents a bivalent organic group in the general formula (3)) as a constituent element.

**Chemical formula -- (3)**

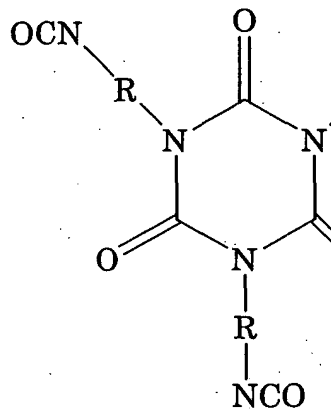

4. The adhesive composition according to any of claims 1 to 3, wherein the epoxy resin (A) has a novolak type epoxy resin represented with a following general formula (4) (where, G represents a glycidyl group, R represents -H or $-CH_3$, and n represents an integer of 1 or more in the general formula (4)) as a principal component.

**Chemical formula -- (4)**

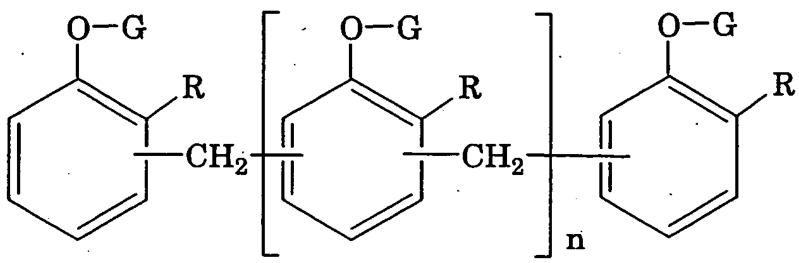

5. The adhesive composition according to any of claims 1 to 3, wherein the epoxy resin (A) has a biphenyl type epoxy resin represented with a following general formula (5) (where, R represents -H or $-CH_3$ in the general formula (5)) as a principal component.

**Chemical formula -- (5)**

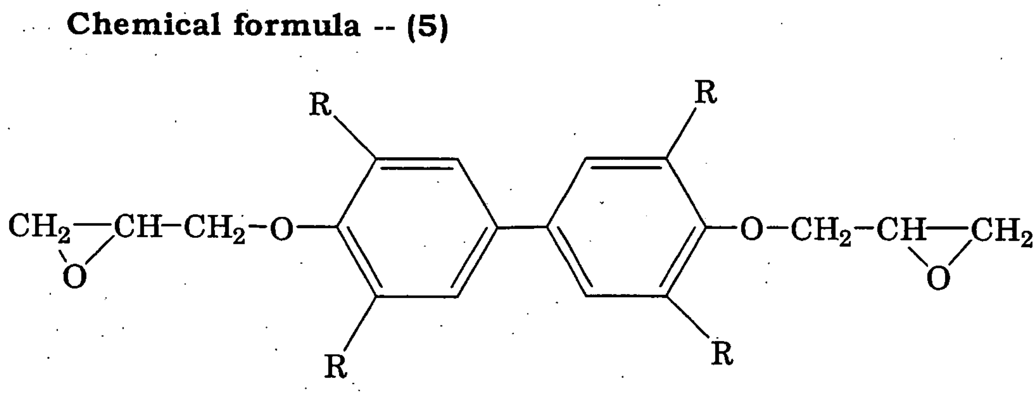

6. The adhesive composition according to any of claims 1 to 3, wherein the epoxy resin (A) has a tris hydroxyphenylmethane type epoxy resin represented with a following general formula (6) (where, G represents a glycidyl

group, R represents -H or $-CH_3$, and n represents an integer of 0 or 1 or more in the general formula (6)) as a principal component.

**Chemical formula -- (6)**

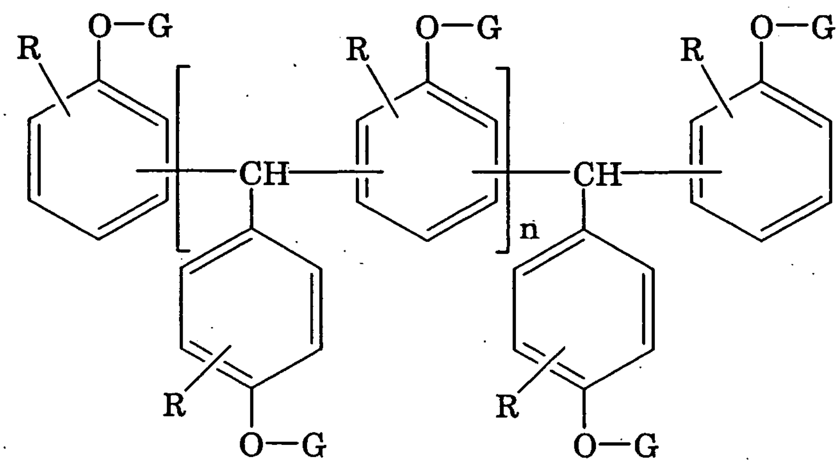

7. The adhesive composition according to any of claims 1 to 3, wherein the epoxy resin (A) has a tetraphenylol ethane type epoxy resin represented with a following general formula (7) (where, G represents a glycidyl group, and $R_1$ and $R_2$ independently represent - H or $-CH_3$, respectively, in the general formula (7)) as a principal component.

**Chemical formula -- (7)**

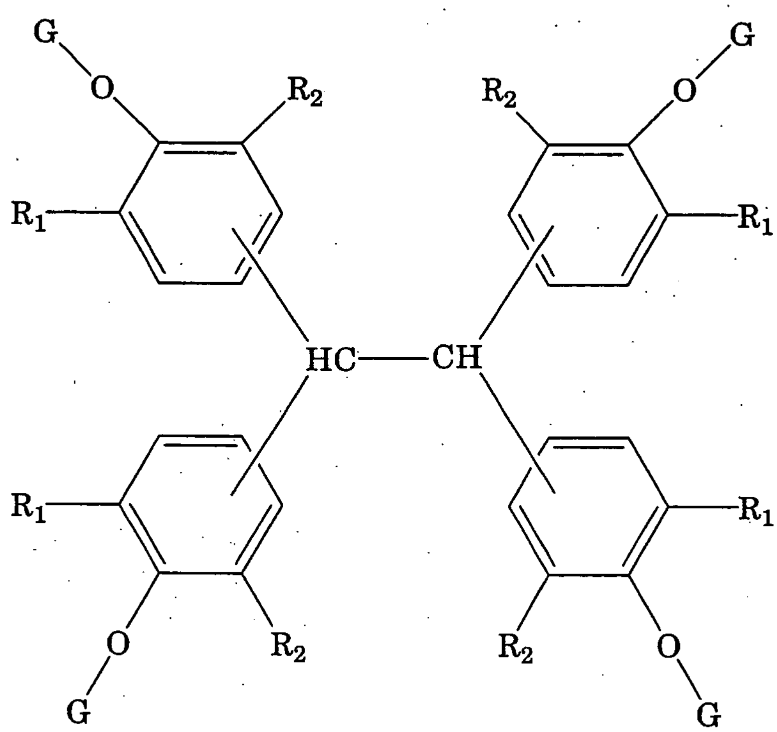

8. The adhesive composition according to any of claims 1 to 7, wherein the phenol resin (B) is a phenol novolak resin

represented with a following general formula (8) (where, n represents an integer of 0 or 1 or more in the general formula (8)).

**Chemical formula -- (8)**

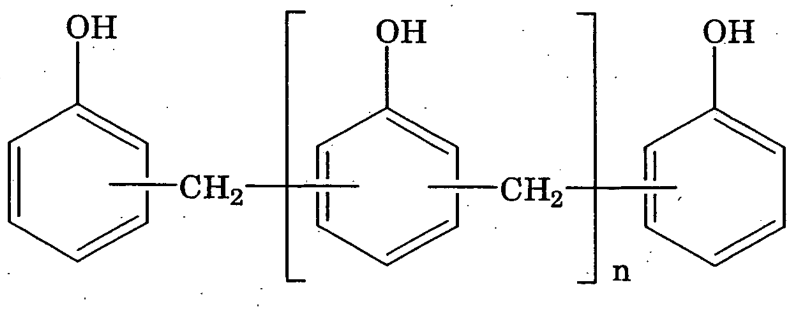

9. The adhesive composition according to any of claims 1 to 7, wherein the phenol resin (B) is a phenol aralkyl resin represented with a following general formula (9) (where, n represents an integer of 0 or 1 or more in the general formula (9)).

**Chemical formula -- (9)**

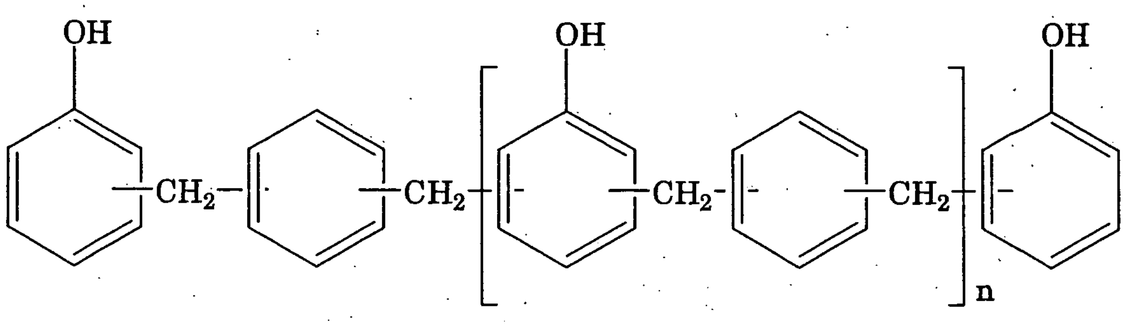

10. The adhesive composition according to any of claims 1 to 9, wherein the synthetic rubber (C) is an acrylonitrile-butadiene rubber having a repeating unit represented with a following general formula (10) (where, x : y = 1 - 99 : 1 - 99 in the general formula (10)) as a principal constituent element.

**Chemical formula -- (10)**

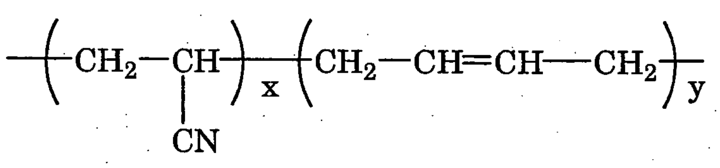

11. The adhesive composition according to any of claims 1 to 10, wherein the synthetic rubber (C) is a carboxylated acrylonitrile-butadiene rubber having a repeating unit represented with a following general formula (11) (where, R represents -H or $-CH_3$, and x : y : z = 1 - 98 : 1 - 98 : 1 - 98 in the general formula (11)) as a principal constituent element.

**Chemical formula -- (11)**

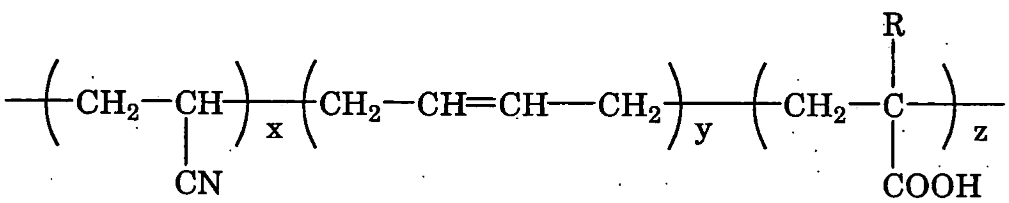

12. The adhesive composition according to any of claims 1 to 10, wherein the synthetic rubber (C) is a carboxylated acrylic rubber having a repeating unit represented with a following general formula (12) (where, R represents a monovalent organic group, and x represents an integer of 1 or more in the general formula (12)) as a principal constituent element.

**Chemical formula -- (12)**

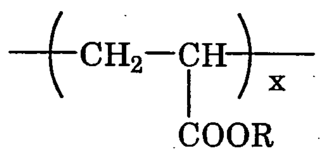

13. The adhesive composition according to any of claims 1 to 12, wherein inorganic fillers are further included.

14. An adhesive film being formed of the adhesive composition according to any of claims 1 to 13.

15. A laminated adhesive film comprising the adhesive film according to Claim 14 and a pressure sensitive adhesive film.

16. An adhesive film for die bonding using the adhesive film according to Claim 14 or 15.

17. A semiconductor apparatus wherein a semiconductor device is die-bonded using the adhesive film for die bonding according to Claim 16.

European Patent Office

# EUROPEAN SEARCH REPORT

Application Number
EP 03 02 7468

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN<br>vol. 1998, no. 12,<br>31 October 1998 (1998-10-31)<br>& JP 10 189832 A (NITTO DENKO CORP),<br>21 July 1998 (1998-07-21)<br>* abstract *<br>----- | 1-17 | C09J163/00<br>C08G59/18 |
| X | EP 1 009 025 A (NITTO DENKO CORP)<br>14 June 2000 (2000-06-14)<br>* page 6, line 43 - line 45; claims *<br>----- | 1-17 | |
| | | | TECHNICAL FIELDS SEARCHED (Int.Cl.7) |
| | | | C08G |

The present search report has been drawn up for all claims

| Place of search | Date of completion of the search | Examiner |
|---|---|---|
| The Hague | 11 May 2004 | Deraedt, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 02 7468

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2004

| Patent document cited in search report | Publication date | Patent family member(s) | Publication date |
|---|---|---|---|
| JP 10189832 A | 21-07-1998 | NONE | |
| EP 1009025 A | 14-06-2000 | JP 2000230039 A | 22-08-2000 |
| | | CN 1256288 A | 14-06-2000 |
| | | EP 1009025 A2 | 14-06-2000 |
| | | KR 2000047506 A | 25-07-2000 |
| | | TW 500759 B | 01-09-2002 |
| | | US 6248454 B1 | 19-06-2001 |

EPO FORM P0459

For more details about this annex : see Official Journal of the European Patent Office, No. 12/82